Europäisches Patentamt

European Patent Office

Office européen des brevets

(11) Publication number: **0 458 436 A2**

# EUROPEAN PATENT APPLICATION

(21) Application number: **91301285.2**

(22) Date of filing: **19.02.91**

(51) Int. Cl.⁵: **B29C 65/02**, B29C 35/02,
B29C 43/02, B29D 30/54,
//B29K21/00,B29L30:00

(30) Priority: **09.05.90 US 521333**

(43) Date of publication of application:
**27.11.91 Bulletin 91/48**

(84) Designated Contracting States:
**DE FR GB IT**

(71) Applicant: **PRESTI RUBBER PRODUCTS, INC.**
**98 Spring Lake Drive, P.O. Box 200**
**New Britain, Pennsylvania 18901(US)**

(72) Inventor: **Presti, Frederick J.**
**164 Shady Brook Circle**
**Warrington, Pennsylvania 18976(US)**

(74) Representative: **Newby, John Ross et al**
**J.Y. & G.W. Johnson Furnival House 14/18**
**High Holborn**
**London WC1V 6DE(GB)**

(54) **Method for manufacturing curing envelope for use in tire retreading.**

(57) Outer [12] and inner [10] elastomeric envelopes
are compression-molded to contiguously encase the
interior and exterior surfaces of a tire to prevent any
air or steam present during a retreading process
from penetrating the cushion gum [20] between the
retread [16] and tire casing [18]. The outer envelope
[12] of outwardly opening U-shape radial cross-sec-
tion covers the tire periphery and a portion of the
outer walls. The inner envelope [10] includes a
member [10(a, b)] of inwardly opening U-shape ra-
dial cross-section which covers the inside wall of the
casing [18]; and a pair of flanges [22] outwardly
opening U-shape radial cross-section, secured to
opposite sides of the member [10(a, b)], which cover
the tire beads and a portion of the outer walls of the
tire and underlap the outer envelope [12].

FIG.2

## Background of the Invention

The present invention relates generally to tire retreading, and more particularly to improved methods and apparatus for curing envelopes for use in tire retreading.

In retreading a tire, the used casing is usually prepared by buffing off the worn tread to a profile at the periphery suitable for mounting a new tread. A pre-cured and buffed tread is then adhered about the periphery of the casing with a lamina of uncured cushion gum cemented between the tread and casing. A resilient outer curing envelope of molded synthetic rubber, such as manufactured by the applicant of the present application, is placed around the periphery of the assembly and suitably sealed around the opposite outer walls of the casing or near the tire bead, and a vacuum is drawn through a valve in the envelope for stretching the envelope into intimate contact with all surfaces of the tread. The curing envelope thus assures during the curing process that no air or steam penetrates into the cushion gum, and that pressure is uniformly applied over the entire bonding area without tread distortion. The tire is then placed in the autoclave for several hours at an elevated temperature and pressure to cure the gum and positively bond the casing and tread together. The envelope is then removed for re-use.

Various techniques for sealing the envelope around the tire have been employed which require special mountings, rims and curing innertubes. However, in addition to increasing labor and equipment costs, such techniques often diminish the efficiency and uniformity of heat transfer for curing the cushion gum. Furthermore, if the tire casing has a small crack or hole, air may seep through and cause separation at the tread and casing interface. Even if a repair were applied at the hole, the environment of the autoclave may cause the repair to fail during the curing process if the repair is left unprotected.

An alternative arrangement for sealing the outer envelope uses a synthetic rubber inner envelope in combination with the outer envelope. One such inner envelope has been fabricated from four annular sections of calendared sheet seamed together to approximate the general cross sectional profile of the casing for covering the entire inside wall, bead, and annular inner portions of the opposite outer walls. An annular boss is cemented along the outer perimeter on which the outer envelope overlaps to form annular seals. Thus, when a vacuum is drawn, the space at the interface of the tire and the outer and inner envelopes is completely evacuated.

While such inner envelopes may function satisfactorily for some purposes, breaks in the many seams and cemented surfaces with frequent re-use prevent drawing the vacuum required between the tire and envelope interfaces. In addition, the relatively high pliability of the calendared sheet envelopes precludes simultaneously vulcanizing rubber on restored bead surfaces of the tire while retreading because the envelopes cannot retain the cross sectional profile of the bead during the curing process. Furthermore, there is a demand for form-fit durable inner curing envelope which can be readily installed on a tire in combination with an outer curing envelope, and re-used over a relatively long period of time before wearing out.

## Summary of the Invention

Accordingly, it is an object of the present invention to provide a novel and improved inner curing envelope for use with an outer curing envelope in a tire retreading process.

Another object of the invention is to provide a durable, form-fit curing envelope suitable for use in tire retreading and bead reconstruction.

A further object of the invention is to provide an improved inner curing envelope for reliably sealing a tire from air and steam present during a retreading process.

A still further object of the invention is to provide durable inner envelopes which can be readily manufactured and installed on a tire.

Yet another object of the invention is to provide a novel and improved process for making an inner curing envelope used in retreading tires and reconstructing tire beads.

Briefly, these and other objects and aspects of the invention are accomplished by an inner curing envelope of synthetic rubber formed to cover the interior wall of a tire, to form-fit around the opposite beads of the tire, and to underlap an outer curing envelope for providing therewith a completely sealed enclosure. The inner envelope includes a compression-molded annular web of generally U-shaped radial cross-section opening inwardly and having an extended width substantially corresponding to the extended width of the interior wall of the tire. A pair of compression-molded annular flanges of generally U-shaped radial cross-section opening outwardly are each seamed along one outer edge thereof to the opposite inner edges of the web with the base portion extending radially outward. The other outer edges of the flanges are formed into beads of wedge-shaped radial cross-section. In one embodiment, the inner envelope is sized to radially locate the beads on the outer walls of the tire at their widest dimension to form a seal with the underlapping edges of the outer curing envelope. In another embodiment, the inner envelope is sized to radially locate the beads adjacent to the tire beads and form a seal with the underlapping edges of the outer envelope at the inner surface of the tire bead.

The inner curing envelope is produced by a method which comprises the steps of: compression molding a first elastomeric annular member into an inwardly opening U-shaped radial cross-section for covering the inside wall of the tire casing; compression molding second elastomeric annular members into an outwardly opening U-shaped radial cross-section for covering the tire bead and a portion of the outer walls of the tire; and adhering a pair of the second members in opposed relation to the first member, the second members being secured along the proximal edges thereof to the distal edges of the first member.

Brief Description of the Drawings

Other objects, advantages and novel features of the invention will become more apparent from the following detailed description of the invention when considered in conjunction with the accompanying drawings wherein:

FIG. 1 is a perspective view of one embodiment of an inner curing envelope according to the invention installed with an outer curing envelope on a tire;

FIG. 2 is a radial cross-sectional view of the inner and outer curing envelopes and the tire, under external pressure, taken along the line 2-2 of FIG. 1;

FIG. 3 is a radial cross-sectional view of the inner and outer curing envelopes of FIG. 1 in a relaxed state;

FIG. 4 is an enlarged radial cross-sectional view of a flange of the inner curing envelope of FIG. 3; and

FIG. 5 is a radial cross-sectional view, like FIG. 2, of another embodiment of the inner curing envelope installed with an outer envelope on a tire and under external pressure.

Description of the Preferred Embodiment

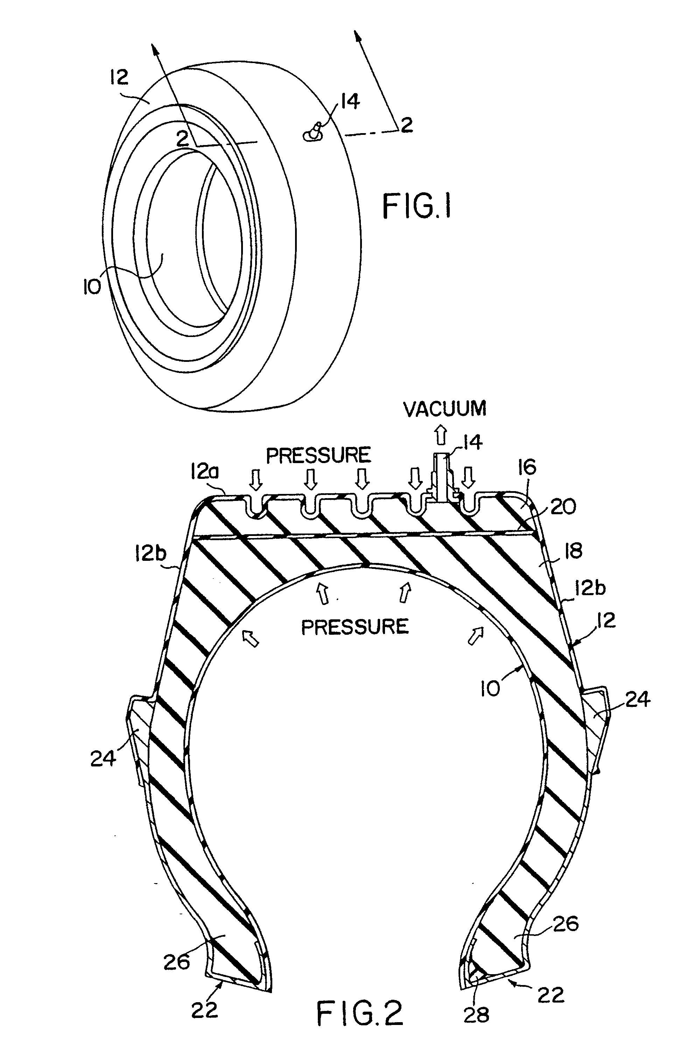

Referring now to the drawings wherein like characters designate like or corresponding parts throughout the several views, FIG. 1 shows an inner curing liner or envelope 10 installed with an outer curing envelope 12 on a tire which is totally enclosed therewithin. A valve 14 in outer envelope 12 provides a connection for drawing a vacuum in the space between the envelopes 10 and 12 and the tire.

FIG. 2 shows the envelopes and tire assembly after a vacuum has been drawn and the tire placed under pressure such as in a curing autoclave. The tire includes a pre-cured tread 16 adhered to the periphery of a casing 18 with a layer of uncured cushion gum 20 which is to be cured in the autoclave at an elevated temperature and pressure for a good bond of the tread 16 to casing 18.

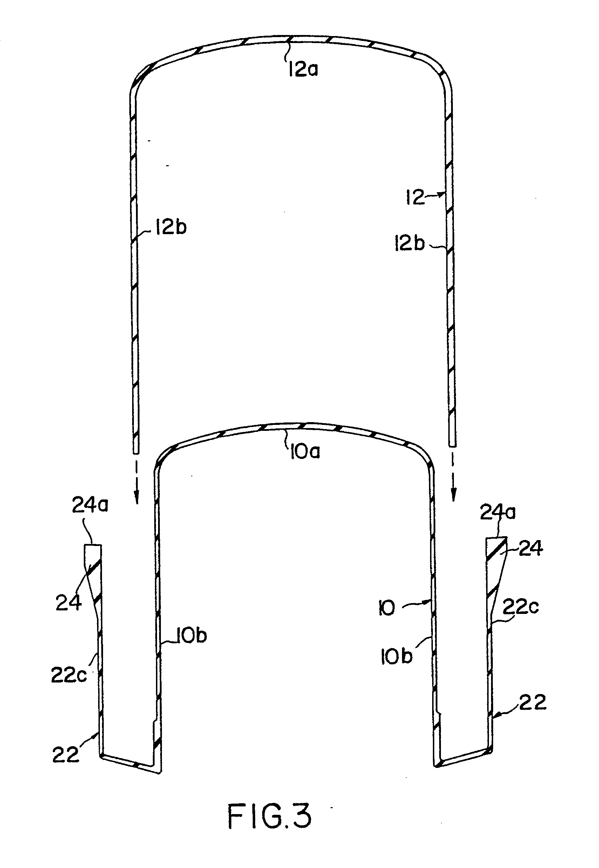

In its relaxed state as shown in FIG. 3, envelope 12 is of synthetic rubber compression-molded into a generally U-shaped radial cross-section and includes an annular base 12a with inwardly extending sides or skirts 12b. It is preferable that skirts 12b be of thinner gage than base 12a for ease in stretching envelope 12 over the tire while minimizing tread distortion when pressure is applied to the tire.

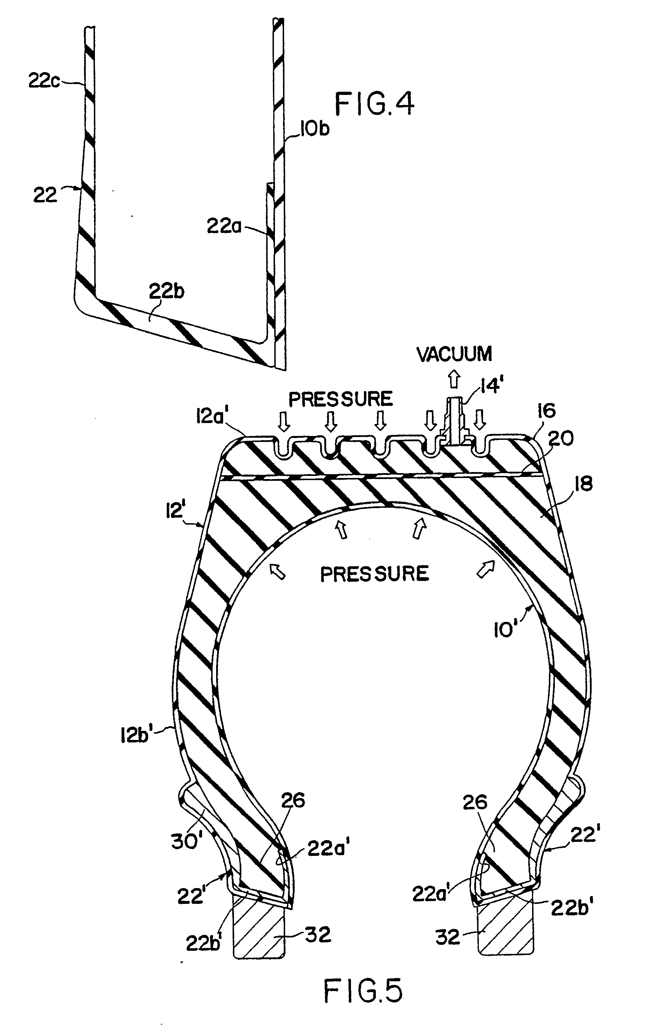

Inner envelope 10, in the relaxed state of FIG. 3, is also of synthetic rubber compression-molded into a general U-shaped radial cross-section and has an annular base 10a with inwardly extending skirts 10b like outer envelope 12. In addition, envelope 10 includes annular flanges 22 of synthetic rubber compression-molded into a generally U-shaped radial cross-section with sides 22a and 22c extending outwardly from a base 22b. As best seen in FIG. 4, side 22a of each flange 22 is seamed along respective radially inner edges of envelope skirts 10b with base 22b axially extending outward. The other side 22c terminates in a bead 24 of wedge-shape radial cross-section with a blunt face 24a normal to the length of side 22c. This provides a seal interface with outer envelope 12 and a tear-resistant edge. For maximum sealing at the underlap with outer envelope 12, side 22c is formed to dispose bead 24 radially on the outer walls of the tire at its maximum width. The thickness of flange 22, or the combined thickness of flange 22 and skirt 10b, adjacent to the tire bead is greater than the gage along skirt 10b and side 22c in order to provide in relief the original contour of a tire bead 26 (FIG. 2) when envelope 10 is drawn under vacuum toward a damaged surface. This allows room within flange 22 for building up a damaged bead with uncured rubber 28 to restore it to the original contour during the retreading process.

As illustrated in FIG. 2, with a vacuum drawn at valve 14 and pressure subsequently applied, the inner and outer curing envelopes 10 and 12 come into intimate, contiguous contact with the entire tread surface and with all exposed surfaces of the casing 18 and cushion gum 20. A positive seal is also established between envelopes 10 and 12 where skirts 12b overlap faces 24a of beads 24. There being no air or other gases or vapor present, a solid bond is achieved when cushion gum 20 vulcanizes. At the same time, any surfaces built-up such as with rubber 28 at the bead 26 are also restored to the original contour.

Some tire retreading processes utilize an outer curing envelope which completely covers the entire external surface of the tire, and forms an annular seal where it overlaps an inner curing envelope at the periphery of the tire bead. To accommodate such processes, FIG. 5 shows an alternate embodiment of an inner curing envelope 10', according to the invention, fitted around the inside wall of casing 18. Envelope 10' includes annular flanges 22' of synthetic rubber compression-molded into a generally U-shaped radial cross-section with beads 30 radially extending outwardly from the distal ends of bases 22b' adjacent to beads 26. Sides 22a' radially extending from the proximal ends of bases 22b' are seamed to envelope 10' in the same manner as described in the embodiment of FIG. 4. A positive seal obtains from a pressure transmitted by curing rims 32 through the inner and outer envelopes 10' and 12' to the inside surface of beads 26.

A novel method has been developed for manufacturing the inner curing envelope of the present invention. To this end, the first annular elastomeric member 10a is molded, preferably by compression, into the inwardly opening U-shaped radial cross sectional configuration illustrated in Fig. 3 for covering the inside wall of the tire casing. Such a configuration is similar to the configuration of the outer casing 12a, but is of slightly smaller dimensions. A pair of second annular elastomeric members of the configuration illustrated in Fig. 3, except for the first member 10a and its skirts 10b, 10b, are compression molded. Each of the second annular elastomeric members has an outwardly open U-shaped radial cross section such as illustrated in Fig. 3 and the enlarged fragmentary view illustrated in Fig. 4. As discussed heretofore, each of these second members is adhered along the distal edge marginal portions of the inner member 10a as illustrated in Fig. 3. Preferably, the second members are adhered by vulcanization of their proximal edge marginal portions to the distal edge marginal portions of the inner member 10a. Vulcanization is accomplished by application of heat and pressure for a predetermined time interval sufficient to effect a strong permanent bond.

Prior to the vulcanizing step, the upper surface of the distal marginal edge portion is prepared. Preparation may include buffing of the surface, but should also include cleaning with a heptane solvent. After application of the solvent, the surface is dried. Thereafter, a layer of uncured elastomeric material which is compatible with the members is applied in the form of a flexible solid ribbon, or tape, on the upper surface of the first member skirt 10b. This ribbon is stitched around the distal edge of the skirt 10b by means of a suitable stitching tool. The upper surface of the ribbon is thereafter tackified, as by being wiped with heptane solvent which is permitted to dry.

One of the second members is placed in a split annular portable fixture which is sized to maintain the member 22 in its substantially U-shaped configuration in which the sides 22a and 22c extend in substantially parallel relation. Preferably, the split fixture is portable and includes a removable, central annular flange which fits inside the inner diameter of the annular platen supporting the inner member 10a, and aids in aligning the lower edge of the side 22a with the distal edge of the first member skirt 10b, such as illustrated in Fig. 4, during vulcanization. Preferably, the surface of the side 22a confronting the inner member skirt 10b is also cleaned with a solvent and permitted to dry while still in the movable split fixture.

Thereafter, the split fixture with member 22 mounted therein is superimposed on the platen with the side 22a confronting the previously-applied tackified layer of uncured elastomeric material. The fixture is then clamped to the platen for a predetermined time interval while pressure is maintained and heat is applied to the platen to effect vulcanization of the uncured layer. After the predetermined time interval, the split fixture is opened and removed from the second member 22, and the vulcanized assembly is removed from the platen and allowed to cool to a temperature approaching ambient. The thus-formed cooled assembly is then inverted and repositioned on the platen, and the previously mentioned procedure is repeated with respect to the second of the pair of the second members so that the second members are sequentially vulcanized to the first member to form the tripartite curing envelope of the present invention.

For maximum adhesion and strength, it is preferable for the layer of uncured elastomeric material to extend the entire width of the side 22a which, as illustrated, is disposed on the outer marginal edge portions of the inner member 10a. The time, temperature and pressure required to effect vulcanization of the uncured ribbon to the members is well known to those skilled in the art. Moreover, for ease in preparation of the various surfaces, the platen on which the inner member is supported is disposed horizontally at a convenient working elevation.

Instead of using a ribbon of uncured elastomeric material, the second members may be secured to the first member by appropirate adhesives which may be heat-activated. Also, the first member may be formed by blow-molding techniques rather than compression-molded as preferred.

Some of the many advantages and novel features of the invention should now be readily apparent. For example, an inner curing envelope for tire retreading processes is provided composed of only three compression-molded sections sealingly connected at only two seams. This construction enables the use of shorter outer skirts at lower cost to the retreader and, due to its lightweight, installation ease in less time on a tire which has been prepared for retreading. The inner curing envelope also eliminates the need for curing tubes or inflation, protects the tire inner-liner, eliminates tread separation caused by faulty inner liners, improves patch adhesion, and allows consistent heat transfer for uniform cures. The molded configuration of the inner curing envelope, particularly at the tire beads, is useful in the restoration of damaged tire beads by enabling these repairs to be completed during the retread curing process. The wedge-shaped edges, compression-molded at the exposed edges of the envelope, provide durability and additional sealing at the overlap with an outer curing envelope.

It will be understood, of course, that various changes in the details, steps and arrangement of parts, which have been herein described and illustrated in order to explain the nature of the invention, may be made by those skilled in the art within the principles and scope of the invention as expressed in the appended claims.

**Claims**

1. A method for making an inner curing envelope [10] for use in retreading tires, comprising the steps of:
    compression molding a first elastomeric annular member
        [10(a, b)] into an inwardly opening U-shape wall of the tire casing [18];
    compression molding second elastomeric annular members
        [22] into an outwardly opening U-shaped radial cross-section for covering the tire bead and a portion of the outer walls of the tire; and
    adhering a pair of the second members [22] in opposed
        relation to said first member [10(a, b)], the second members [22] being secured along the proximal edges thereof to the distal edges of the first member [10(a, b)].

2. The method according to claim 1 wherein said adhering step includes the step of interposing between said first annular member [10(a, b)] and each of said second members [22] a layer of uncured elastomeric material compatible with said members [10(a, b), 22] and subsequently vulcanizing said layer between its adjacent members [10(a, b), 22].

3. The method according to claim 2 wherein said adhering step includes the steps of supporting at least the distal edge margins of the first U-shaped member [10(a, b)] against a platen, supporting said second member [22] in a fixture to maintain it in its U-shaped configuration with its proximal edge portion confronting the distal edge portion of said first member [10(a, b)], and clamping said fixture to said platen while vulcanizing said elastomeric layer to its adjacent members [10(a, b), 22].

4. The method according to claim 3 wherein said second members [22] are sequentially vulcanized to said first member [10(a, b)].

5. The method according to claim 4 wherein between said sequential vulcanization of said second members [22] to said first member [10(a, b)], said first member [10(a, b)] is inverted on said platen.

6. The method according to claim 2 wherein the surface of said first member [10(a, b)] is prepared by at least cleaning with a solvent before said members [10 (a, b), 22] are vulcanized.

7. The method according to claim 6 wherein said layer of uncured elastomeric material is in the form of a ribbon and is stitched in position prior to said vulcanization step, and said uncured elastomeric material is tackified with a solvent prior to vulcanization.

8. The method according to claim 7 including the step of aligning the edge portions of said members [10(a, b), 22] with the ribbon during the vulcanization step.

9. The method according to claim 7 wherein said layer of uncured elastomeric material is applied so as to extend along substantially the entire extent of the edge margins of said second members [22].

10. A method of making a tripartite inner curing envelope [10] for use in retreading tires, the envelope [10] including a first molded annular elastomeric member [10(a, b)] having an inwardly opening U-shaped radial cross-section for covering the inside wall of the tire casing [18] and a pair of second molded annular elastomeric members [22] each having an outwardly opening U-shaped radial cross-section for covering the tire bead and a portion of the outer walls of the tire, the first member [10(a, b)] having distal edge margins and the pair of second members [22] having edge margins adhered to the distal edge margins of the first member [10(a, b)] for overlapping at least in part the outer sides of the first member [10(a, b)], said method comprising the steps of: applying to at least one of the edge margins a layer of

uncured elastomeric material, and adhering said second molded members [22] to said first molded member [10(a, b)], whereby the tripartite inner curing envelope [10] is formed.

11. The method according to claim 10 wherein said adhering step is performed sequentially, with one of said pair of second members [22] being first adhered to said first member [10(a, b)] followed by adhering of the other of said pair of second members [22] to said first member [10(a, b)].

12. The method according to claim 10 wherein said edge margins are prepared by application of a solvent prior to application thereto of said layer of uncured elastomeric material which is vulcanized between said members [10(a, b), 22].

13. The method according to claim 10 wherein said layer of uncured elastomeric material is applied in the form of a solid flexible ribbon, and including the step of tackifying the tape prior to vulcanizing said members [10(a, b), 22].

14. The method according to claim 10 wherein the second member [22] is mounted in a fixture and is retained in the fixture with its edge margin disposed against the elastomeric material with pressure during the adhering step.

15. The method according to claim 10 wherein the second member [22] is supported in its U-shaped configuration in a split fixture during said adhering step and wherein the first member [10(a, b)] is supported on an annular platen during said adhering step while clamping pressure is being applied.

16. The method according to claim 10 including the step of maintaining the edges of the first member [10(a, b)] and the second member [22] aligned with one another during said adhering step.

17. The method according to claim 10 wherein the second member [22] is adhered over substantially its entire extent on the outside of the first member [10(a, b)] during said adhering step.

FIG.1

FIG.2

FIG.3

FIG.4

FIG.5